# EUROPÄISCHE PATENTANMELDUNG

(11) **EP 4 461 170 A1**
(43) Veröffentlichungstag der Anmeldung: **13.11.2024**
(21) Anmeldenummer: 24174373.1
(22) Anmeldetag: 06.05.2024
(51) Int. Cl.: A47J 36/20, A47J 43/07

(54) **GAR-EINSATZ FÜR EINE KÜCHENMASCHINE**

(30) Priorität: 09.05.2023 DE 102023112145
(71) Anmelder: Wundermix GmbH, 85748 Garching b. München (DE)
(72) Erfinder: Keusgen, Adrian, 79346 Endingen am Kaiserstuhl (DE)
(74) Vertreter: Patentanwälte Bauer Vorberg Kayser

(57) **Zusammenfassung**

Die vorliegende Erfindung betrifft einen Gar-Einsatz (1) für eine einen Topf aufweisende Küchenmaschine, aufweisend einen Einsatzkörper (2), in welchem zumindest eine Speisenaufnahme (3) zum Aufnehmen einer Speise ausgebildet ist.

Der Gar-Einsatz zeichnet sich dadurch aus, dass er in den Topf oder in ein auf dem Topf angeordnetes Gefäß derart einsetzbar ist, dass der Gar-Einsatz (1) kontaktlos zu einem Topfboden des Topfes oder einem Gefäßboden des Gefäßes in dem Topf respektive dem Gefäß angeordnet werden kann. Damit kann die Wärmeverteilung in Bezug auf die Speisenaufnahmen (3) verbessert werden.

## Beschreibung

Die vorliegende Erfindung betrifft einen Gar-Einsatz für eine einen Topf aufweisende Küchenmaschine, aufweisend einen Einsatzkörper, in welchem zumindest eine Speisenaufnahme zum Aufnehmen einer Speise ausgebildet ist.

Küchenmaschinen werden in der Regel zur Bearbeitung und Verarbeitung von Lebensmitteln und zur Zubereitung von Speisen eingesetzt. Es existieren Multifunktionsküchenmaschinen, wie beispielsweise jene vom Unternehmen "Vorwerk" vertriebene Thermomix^{®} Küchenmaschine in den Modellen TM5 und TM6. Eine solche Küchenmaschine umfasst einen aufheizbaren Topf. Der Topf weist eine Topföffnung auf. Die Topföffnung ist mit einem Topfdeckel abdeckbar (verschließbar), wobei der Topfdeckel eine Zuführöffnung aufweist, die einen geringeren Durchmesser als die Topföffnung hat. Die Zuführöffnung ist mittig im Topfdeckel angeordnet. In dem Topf kann im Bereich eines Topfbodens ein Misch- und Zerkleinerungswerkzeug rotierbar angeordnet sein, insbesondere ein Mixmesser. Beim Betrieb der Küchenmaschine ist die Topföffnung des Topfes mit dem Topfdeckel abgedeckt. Durch die in dem Topfdeckel ausgebildete Zuführöffnung können Zutaten in den Zubereitungstopf eingeführt werden. Der Topf ist in eine Topfaufnahme einer Küchenmaschinen-Basiseinheit eingesetzt. Der Topf ist wie erwähnt aufheizbar (z. B. durch ein integriertes Heizelement oder durch Aufheizen von außen), sodass im Topf befindliche Speisen oder Lebensmittel aufgeheizt oder gegart werden können. Beim Aufheizen oder Garen von Lebensmitteln (z. B. auch Wasser) kann Dampf (Wasserdampf) aufsteigen und durch die Zuführöffnung nach topfaußen entweichen.

Bei Verwendung mit einer Thermomix^{®} Küchenmaschine kann ein Gargefäß unmittelbar auf den Topfdeckel aufgesetzt werden, mit welchem der Topf der Küchenmaschine abgedeckt wird. Entsprechende Gargefäße werden unter der Bezeichnung "Varoma" vertrieben. Da der Topf aufheizbar ist kann- sofern in dem Topf Lebensmittel oder Wasser befindlich sind - beim Aufheizen Dampf (Wasserdampf) entstehen, aufsteigen und durch die Zuführöffnung des Topfdeckels und im Gargefäß-Boden ausgebildete Öffnungen in das Gargefäß aufsteigtn. Durch den (heißen) Dampf können in dem Gargefäß befindliche Lebensmittel gegart werden.

Die DE 10 2014 112 959 A1 offenbart ein Gargefäß zum Aufsetzen auf einen Topf einer Küchenmaschine, welcher wobei das Gargefäß eine oder mehrere Bodenöffnungen aufweist, durch welche aus dem Topf austretender Wasserdampf in den Garaufsatz eintreten und Kondensat aus dem Gargefäß in den Topf fließen kann.

Aus dem Stand der Technik sind Gar-Einsätze zum Pochieren von Eiern bekannt, die mit einem Einsatzkörper auf einem Boden (z. B. eines Topfes einer Küchenmaschine oder eines dieser zugehörigen Gargefäßes) aufstehen.

Der vorliegenden Erfindung liegt die Aufgabe zugrunde einen Gar-Einsatz für eine Küchenmaschine bereitzustellen, mit dem Speisen optimiert gegart werden können.

Gelöst wird diese Aufgabe mit einem Gar-Einsatz gemäß Anspruch 1.

So betrifft die vorliegende Erfindung einen Gar-Einsatz für eine einen Topf aufweisende Küchenmaschine, aufweisend einen Einsatzkörper, in welchem zumindest eine Speisenaufnahme zum Aufnehmen einer Speise ausgebildet ist. Der Gar-Einsatz zeichnet sich dadurch aus, dass der Gar-Einsatz in den Topf oder in ein auf dem Topf angeordnetes Gefäß derart einsetzbar ist, dass der Gar-Einsatz kontaktlos zu einem Topfboden des Topfes oder einem Gefäßboden des Gefäßes in dem Topf respektive dem Gefäß angeordnet werden kann. Dadurch kann im Topf aufsteigender Wasserdampf, der bei Anordnung des Gar-Einsatzes in einem auf dem Topf angeordnetem Gefäß in das Gefäß aufsteigen kann, die zumindest eine Speisenaufnahme in optimierter Weise frei anströmen. Durch Vermeidung eines Bodenkontakts des Gar-Einsatzes, also weder des Einsatzkörpers noch der zumindest einen Speisenaufnahme, kann Wasserdampf ohne Hindernis oder Strömungsbarriere die Unterseite des Gar-Einsatzes bzw. der zumindest einen Speisenaufnahme frei anströmen. Die Erzeugung von ungewünschten Strömungsturbulenzen wird damit vermieden. Ist der Gar-Einsatz in ein auf dem Topf angeordnetes Gargefäß eingesetzt, so strömt der im Topf aufsteigende Wasserdampf durch eine in einem Topfdeckel ausgebildete Zuführöffnung in das Gargefäß ein. Die Zuführöffnung kann bei anderweitiger Nutzung der Küchenmaschine zum Hinzufügen von Lebensmitteln in den Topf (bei aufgesetztem Topfdeckel) verwendet werden. Damit der Gar-Einsatz zum Garen genutzt werden kann, wird in dem Topf eine Flüssigkeit, insbesondere Wasser oder eine Wasser enthaltene Flüssigkeit, eingefüllt. Durch Beheizen des Topfes wird das Wasser erhitzt und es entwickelt sich Wasserdampf. Dieser kann wie beschrieben im Topf aufsteigen.

Der Gar-Einsatz ist vorzugsweise zur Verwendung mit einer Thermomix^{®} Küchenmaschine in den Modellen TM5 und TM6 des Unternehmens Vorwerk ausgebildet. Bei Einsetzen in den Topf, kann der Gar-Einsatz, insbesondere der Einsatzkörper, sich an einer Innenwand des Topfes abstützen daran befestigt sein, sodass der Gar-Einsatz in einer Position oberhalb des Topfbodens gehalten wird. Die Abstützung bzw. Befestigung kann auch an einem Formelement im Innenraum des Topfes, insbesondere an der Innenwand des Topfes, erfolgen. Das Formelement kann eine Rippe sein. Eine Abstützung bzw. Befestigung kann an auch an mehreren Formelementen, z. B. Rippen erfolgen. Dazu kann/können an dem Gar-Einsatz bzw. Einsatzkörper ein/mehrere zu dem Formelement/den Formelementen korrespondierende(s) Formelement(e) ausgebildet sein. Es kann auch vorgesehen sein, dass der Gar-Einsatz in ein in dem Topf angeordnetes Gar-Körbchen eingesetzt wird.

Der Gar-Einsatz kann außerdem derart in den Topf eingesetzt werden, dass der Gar-Einsatz, insbesondere der Einsatzkörper, nur teilweise innerhalb des Topfs angeordnet ist. Der Gar-Einsatz, insbesondere der Einsatzkörper, kann also teilweise innerhalb des Topfs sowie teilweise außerhalb des Topfs angeordnet sein.

Der Gar-Einsatz kann zudem derart ausgebildet sein, dass sich der Gar-Einsatz, insbesondere der Einsatzkörper, beim Einsetzen in den Topf an einer dem Topfboden gegenüberliegend angeordneten Topföffnung des Topfs abstützen kann. Der Gar-Einsatz, insbesondere der Einsatzkörper, kann sich vorzugsweise auf der Topföffnung abstützen.

Der Gar-Einsatz, insbesondere der Einsatzkörper, kann außerdem derart ausgebildet sein, dass dieser, sofern an der Topföffnung abgestützt, von dem Topfdeckel abdeckbar ist.

Bei Anordnung in einem auf den Topf aufgesetzten Gefäß, kann der Gar-Einsatz nach Art eines Einlegebodens ausgebildet sein, der in einem Abstand zum Gargefäßboden in das Gargefäß eingesetzt wird.Weitere Ausgestaltungen der Erfindung sind in den Unteransprüchen sowie der nachfolgenden Beschreibung angegeben.

Nach einer ersten Ausgestaltung der Erfindung kann vorgesehen sein, dass in dem Einsatzkörper mehrere, insbesondere vier oder sechs, Speisenaufnahmen angeordnet sind. Damit können mehrere Portionen von Speisen gleichzeitig gegart werden.

Die mehreren Speisenaufnahmen können in einer Ebene oder auf mehreren unterschiedlichen Ebenen angeordnet sein. Die mehreren Speisenaufnahmen können außerdem unterschiedliche Volumina aufweisen.

Die mehreren Speisenaufnahmen können in einer Reihe oder in einem Kreis zueinander angeordnet sein.

Nach einer weiteren Ausgestaltung der Erfindung kann vorgesehen sein, dass in dem Einsatzkörper eine Durchtrittsöffnung oder mehrere Durchtrittsöffnungen für ein Fluid, insbesondere Wasserdampf, angeordnet sind. Damit wird eine Verteilung des Fluids bzw. des Wasserdampfs im Garraum optimiert. Auch ermöglicht eine solche Durchtrittsöffnung bzw. die mehreren Durchtrittsöffnungen ein Zurücklaufen von kondensiertem Fluid.

Die Durchtrittsöffnung kann eine an die Speisenaufnahme oder die mehreren Speisenaufnahmen angepasste Form aufweisen. Die mehreren Durchtrittsöffnungen können gruppiert ausgebildet sein. Darunter kann zu verstehen sein, dass mehrere Durchtrittsöffnungen eine Gruppe von Durchtrittsöffnungen bilden, welche wieder jeweils an die Speisenaufnahme oder die mehreren Speisenaufnahmen angepasst angeordnet sein können. Die mehreren Durchtrittsöffnungen können außerdem jeweils unterschiedliche Größen bzw. Flächeninhalte aufweisen.

Nach einer weiteren Ausgestaltung der Erfindung kann vorgesehen sein, dass an dem Einsatzkörper ein oder mehrere Griffe angeordnet sind. Griffe ermöglichen ein erleichtertes Positionieren und Entnehmen des Gar-Einsatzes in Bezug auf den Topf respektive das Gargefäß.

Der eine oder die mehreren Griffe können laschenartig ausgebildet sein. Auch kann der eine oder die mehreren Griffe jeweils eine Grifföffnung ausbilden, welche beim Positionieren und Entnehmen des Gar-Einsatzes die Finger eines Nutzers oder eine Positionierungs- oder Entnahmevorrichtung (bspw. einen Haken) aufnehmen können.

Der eine oder die mehreren Griffe können mittig des Einsatzkörpers und/oder an einem Rand des Einsatzkörpers angeordnet sein. Ferner kann der eine oder die mehreren Griffe, sofern an dem Rand des Einsatzkörpers angeordnet, über den Einsatzkörper hinausragen.

Die mehreren Griffe können symmetrisch oder asymmetrisch zueinander an dem Einsatzkörper angeordnet sein.

Nach einer weiteren Ausgestaltung der Erfindung kann vorgesehen sein, dass die zumindest eine Speisenaufnahme halbschalenartig ausgebildet ist, wobei die zumindest eine Speisenaufnahme einen Speisenaufnahmeboden und eine Speisenaufnahmewand aufweist, wobei die Speisenaufnahmewand an den Speisenaufnahmeboden angrenzt. Speisenaufnahmeboden und Speisenaufnahmewand können fließend ineinander übergehend ausgebildet sein, sodass keine scharfe Trennung zwischen Speisenaufnahmeboden und Speisenaufnahmewand vorliegen muss. Die Oberfläche bzw. Innenfläche der Speisenaufnahme kann abgerundet sein (z. B. schalenartig).

Die Speisenaufnahme bzw. die mehren Speisenaufnahmen können eine, insbesondere durch die Speisenaufnahmewand gebildete, Speisenaufnahme-Kontur aufweisen. Die Speisenaufnahme-Kontur kann kreisförmig oder polygonal ausgebildet sein. Auch kann die Speisenaufnahme-Kontur eine andere beliebige Form, wie bspw. eine Sternen-Form oder eine Tier-Form, aufweisen.

Zudem kann der Speisenaufnahmeboden eine Oberfläche aufweisen, welche eine beliebige Form, wie bspw. einen Stern oder ein Tier, aufweist, sodass eine in der Speisenaufnahme zubereitete Speise nach einer Entnahme der Speise aus der Speisenaufnahme eine Negativ-Form des Speisenaufnahmebodens aufweisen kann. Nach einer weiteren Ausgestaltung der Erfindung kann vorgesehen sein, dass der Gar-Einsatz zum Pochieren von Eiern oder zum Garen von Teig- oder Mehlspeisen geeignet ist.

Unter Pochieren kann auch das einfache Garen von Eiern verstanden werden. Dies schließt zudem nicht aus, dass nur ein Teil eines in die Speisenaufnahme gefüllten Eis gegart wird.

Der Gar-Einsatz ist vorzugsweise aus Kunststoff, insbesondere einem lebensmittelechten Kunststoff, gefertigt. Bei dem Gar-Einsatz kann es sich um ein einteiliges Bauteil handeln.

Weitere Ausgestaltungen der vorliegenden Erfindung sind in den Zeichnungen und in der zugehörigen Beschreibung wiedergegeben.

In den Zeichnungen zeigen:
- Fig. 1: eine Perspektivansicht eines Gar-Einsatzes nach einer ersten Ausführungsform der Erfindung;
- Fig. 2: eine Perspektivansicht eines Gar-Einsatzes nach einer zweiten Ausführungsform der Erfindung;
- Fig. 3: eine Seitenansicht des Gar-Einsatzes aus Fig. 2.

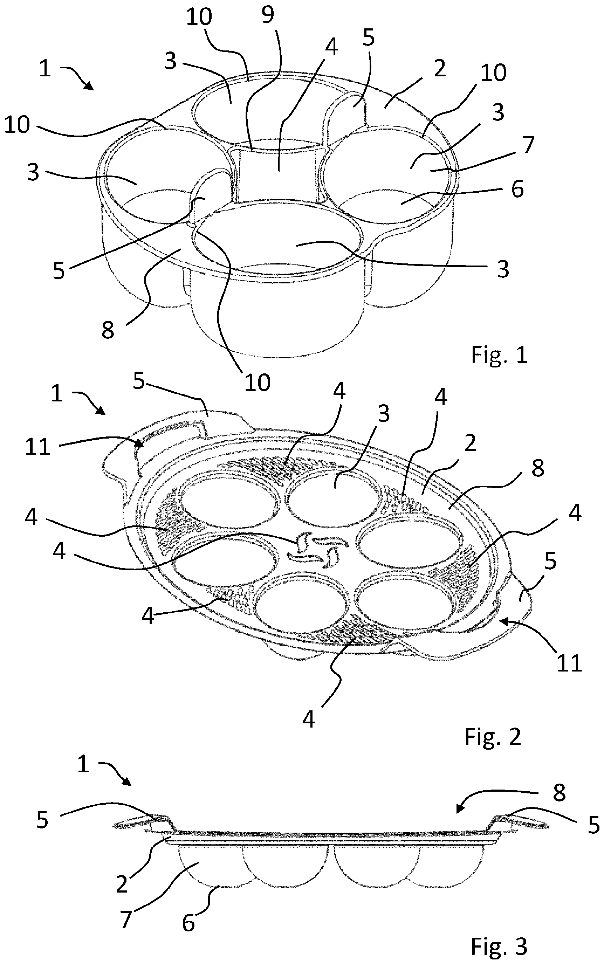

Figur 1 zeigt eine erste Ausführungsform eines Gar-Einsatzes 1 für eine einen Topf aufweisende Küchenmaschine, aufweisend einen Einsatzkörper 2, in welchem vier halbschalenartige Speisenaufnahmen 3 zum Aufnehmen einer Speise ausgebildet sind. Die Speisenaufnahmen 3 weisen eine ovale Speisenaufnahme-Kontur 10 auf. Der Einsatzkörper 2 weist eine Einsatzkörper-Grundfläche 8 auf, von welchem sich die Speisenaufnahmen 3 wegerstrecken.

Der Gar-Einsatz 1 kann in den Topf oder in ein auf dem Topf angeordnetes Gefäß derart einsetzbar sein, dass der Gar-Einsatz 1 kontaktlos zu einem Topfboden des Topfes oder einem Gefäßboden des Gefäßes in dem Topf respektive dem Gefäß angeordnet werden kann.

In dem Einsatzkörper 2 ist eine Durchtrittsöffnung 4 für ein Fluid, insbesondere Wasserdampf, angeordnet. Bei der Durchtrittsöffnung 4 handelt es sich um eine Lochöffnung, sodass von unten aufsteigendes Fluid durch den Gar-Einsatz 1 hindurchtreten kann. Gleiches gilt für den Ablauf von Kondensat. Das heißt, dass Kondensat, welches sich bspw. an einem über dem Gar-Einsatz angeordneten Deckel sammelt, durch die Durchtrittsöffnung 4 hindurchtreten kann. Die Durchtrittsöffnung 4 ist mittig der vier Speisenaufnahmen 3 angeordnet und grenzt an diese an. Somit bildet die Durchtrittsöffnung 4 eine an die Speisenaufnahmen 3 angepasste Durchtrittsöffnung-Kontur 9 auf.

An dem Einsatzkörper 2 sind zwei gleichartige Griffe 5 angeordnet. Die zwei Griffe 5 sind an die Durchtrittsöffnung 4 angrenzend und gegenüberliegend zueinander angeordnet. Die Griffe 5 erstrecken sich, den Speisenaufanhmen 3 entgegengesetzt, von der Einsatzkörper-Grundfläche 8 weg. Die Griffe 5 sind laschenförmig ausgebildet.

Fig. 2 zeigt eine zweite Ausführungsform eines Gar-Einsatzes 1 in Perspektivansicht, die sechs Speisenaufnahmen 3 aufweist. Der Gar-Einsatz 1 dieser Ausführungsform ist zum Einsetzen in ein Gefäß vorgesehen, welches auf den Topf einer Küchenmaschine aufgesetzt wird. Der Gar-Einsatz 1 dieser Ausführungsform kann mit den Griffen 5 in entsprechenden Aufnahmen des Gefäßes aufliegen. Dieser Gar-Einsatz 1 kann als eine Art Einlegeboden des Gefäßes verstanden werden, ohne dabei den Gefäßboden zu kontaktieren.

Der Gar-Einsatz 1 aus Figur 2 weist ebenfalls eine Einsatzkörper-Grundfläche 8 auf, von welcher sich die Speisenaufnahmen 3 und die Griffe 5 in jeweils entgegengesetzte Richtungen wegerstrecken. Die Griffe 5 bilden zudem jeweils mittig der Griffe 5 eine Griff-Öffnung 11 aus.

Der Gar-Einsatz 1 weist zudem mehrere Durchtrittsöffnungen 4 auf. Diese weisen jeweils eine geschwungene Durchtrittsöffnung-Kontur 9 auf. Die mehreren Durchtrittsöffnungen 4 weisen unterschiedliche Größen auf. So sind mittig der Speisenaufnahmen 3 vier Durchtrittsöffnungen 4 angeordnet, welche im Vergleich zu den übrigen Durchtrittsöffnungen 4 größer ausgebildet sind. Die übrigen Durchtrittsöffnungen 4 bilden jeweils Gruppen von mehreren Durchtrittsöffnungen 4.

Bei beiden Ausführungsformen sind die Speisenaufnahmen 3 halbschalenartig ausgebildet, wobei die Speisenaufnahmen 3 jeweils einen Speisenaufnahmeboden 6 und eine Speisenaufnahmewand 7 aufweist, wobei die Speisenaufnahmewand 7 an den Speisenaufnahmeboden 6 angrenzt.

Figur 3 zeigt den Gar-Einsatz 1 aus Figur 2 in einer Seitenansicht. Gezeigt ist insbesondere der Einsatzköper 2 und die halbschalenartigen Speisenaufnahmen 3, welche sich von der Einsatzkörper-Grundfläche 8 wegerstrecken, wobei sich die Griffe 5 in die entgegengesetzte Richtung von der Einsatzkörper-Grundfläche 8 wegerstrecken.

### Bezugszeichenliste

- 1: Gar-Einsatz
- 2: Einsatzkörper
- 3: Speisenaufnahme
- 4: Durchtrittsöffnung
- 5: Griff
- 6: Speisenaufnahmeboden
- 7: Speisenaufnahmewand
- 8: Einsatzkörper-Grundfläche
- 9: Durchtrittsöffnung-Kontur
- 10: Speisenaufnahme-Kontur
- 11: Griff-Öffnung

## Patentansprüche

1. Gar-Einsatz (1) für eine einen Topf aufweisende Küchenmaschine, aufweisend einen Einsatzkörper (2), in welchem zumindest eine Speisenaufnahme (3) zum Aufnehmen einer Speise ausgebildet ist, **dadurch gekennzeichnet, dass** der Gar-Einsatz in den Topf oder in ein auf dem Topf angeordnetes Gefäß derart einsetzbar ist, dass der Gar-Einsatz (1) kontaktlos zu einem Topfboden des Topfes oder einem Gefäßboden des Gefäßes in dem Topf respektive dem Gefäß angeordnet werden kann.

2. Gar-Einsatz (1) nach Anspruch 1, **dadurch gekennzeichnet, dass** in dem Einsatzkörper (2) mehrere, insbesondere vier oder sechs, Speisenaufnahmen (3) angeordnet sind.

3. Gar-Einsatz (1) nach Anspruch 1 oder 2, **dadurch gekennzeichnet, dass** in dem Einsatzkörper (2) eine Durchtrittsöffnung (4) oder mehrere Durchtrittsöffnungen (4) für ein Fluid, insbesondere Wasserdampf, angeordnet sind.

4. Gar-Einsatz (1) nach einem der vorangehenden Ansprüche, **dadurch gekennzeichnet, dass** an dem Einsatzkörper (2) ein oder mehrere Griffe (5) angeordnet sind.

5. Gar-Einsatz (1) nach einem der vorangehenden Ansprüche, **dadurch gekennzeichnet, dass** die zumindest eine Speisenaufnahme halbschalenartig ausgebildet ist, wobei die zumindest eine Speisenaufnahme einen Speisenaufnahmeboden (6) und eine Speisenaufnahmewand (7) aufweist, wobei die Speisenaufnahmewand (7) an den Speisenaufnahmeboden (6) angrenzt.

6. Gar-Einsatz (1) nach einem der vorangehenden Ansprüche, **dadurch gekennzeichnet, dass** der Gar-Einsatz zum Pochieren von Eiern oder zum Garen von Teig- oder Mehlspeisen geeignet ist.
